# EUROPÄISCHE PATENTANMELDUNG

(11) **EP 3 199 492 A1**
(43) Veröffentlichungstag der Anmeldung: **02.08.2017**
(21) Anmeldenummer: 16152939.1
(22) Anmeldetag: 27.01.2016
(51) Int. Cl.: B82Y 15/00, G01N 21/01, G01N 21/25, G01N 21/64, G01N 21/03, G01N 21/17

(54) **VERFAHREN UND VORRICHTUNG ZUR ELEKTROSTATISCH STIMULIERTEN AUSBILDUNG EINER FLÜSSIGKEITSSÄULE FÜR FLUORESZENZ- UND ABSORPTIONSMESSUNGEN**

(71) Anmelder: Clemens GmbH, 97297 Waldbüttelbrunn (DE)
(72) Erfinder: Leu, Martin, 72336 Balingen (DE)
(74) Vertreter: Körfer, Thomas

(57) **Zusammenfassung**

Die Anmeldung betrifft ein Verfahren zur Durchführung einer Fluoreszenz- und/oder Absorptionsmessung an einer flüssigen Probe mit den Schritten Benetzen einer ersten Oberfläche mit einem vorbestimmten Volumen der flüssigen Probe, Anlegen einer elektrischen Gleich- oder Wechsel-Spannung zwischen der ersten Oberfläche (7) und einer zweiten, der ersten Oberfläche gegenüberliegenden Oberfläche (2), so dass sich zwischen der ersten und der zweiten Oberfläche (7,2) eine Proben-Flüssigkeitssäule (5) ausbildet und Durchführen der Fluoreszenz- und/oder Absorptionsmessung durch die Flüssigkeitssäule (5). Zumindest eine der beiden Oberflächen (7,2) ist gegenüber der flüssigen Probe (5) mittels einer Isolierschicht (9) isoliert.

## Beschreibung

Die vorliegende Erfindung betrifft ein Verfahren sowie eine Vorrichtung zur Durchführung einer Fluoreszenz- und/oder Absorptionsmessung an einer flüssigen Probe.

Photometrische und spektrophotometrische Verfahren, insbesondere basierend auf Fluoreszenz- und/oder Absorptionsmessungen, finden in weiten Bereichen von Forschung und Technik Anwendung. Diese Verfahren basieren vereinfacht gesprochen darauf, eine flüssige Probe mit einer Strahlung definierter Eigenschaften zu bestrahlen und den Anteil der absorbierten bzw. emittierten Strahlung zu bestimmen. Für eine quantitative Auswertung ist es dabei in der Regel erforderlich, die Länge des Lichtpfades zu kennen, den die Strahlung innerhalb der Probe zurück gelegt hat. Bei der Vermessung flüssiger Proben wird hierzu in der Regel auf Standardküvetten vorgegebener Dicke zurück gegriffen. Dies macht jedoch oft ein Probenvolumen in der Größenordnung von 1 ml erforderlich. In manchen Anwendungsgebieten wie zum Beispiel der Biologie oder speziell der Gentechnik ist es allerdings häufig schwierig oder mit hohen Kosten verbunden, derartige Probenmengen zu beschaffen. Daher wurde versucht, Verfahren und Spektrometer bereitzustellen, mittels derer sich die Durchführung einer Fluoreszenz- und/oder Absorptionsmessung auch an sehr kleinen Probenmengen durchführen lassen.

Eine Vorrichtung zur Durchführung optischer Messungen an flüssigen Mikroliter- oder Sub-Mikroliter-Proben ist in der WO 01/14855 A1 beschrieben. Das Prinzip dieser Vorrichtung beruht darauf, die flüssige Probe auf einer von zwei relativ bewegbaren gegenüberliegenden Oberflächen oder einem Teil der Probe auf jeder Oberfläche anzuordnen und die Oberflächen aufeinander zu in eine vorbestimmte Kompressionsposition zu bewegen, um die Probe auszubreiten und die Oberflächen mit der flüssigen Probe zu benetzen. Anschließend werden die Oberflächen um eine vorgewählte Distanz zu einer Messposition voneinander weg bewegt, wodurch die Probe durch Oberflächenspannung zwischen den Oberflächen gehalten und in eine Messsäule gezogen wird, die eine gewünschte optische Weglänge aufweist. Durch diese Säule kann dann eine photometrische oder spektrometrische Messung durchgeführt werden.

Die aus der WO 01/14855 A1 bekannte Vorrichtung weist jedoch mehrere Nachteile auf, die hauptsächlich darin begründet sind, das die zwei gegenüberliegenden Oberflächen mit großer Präzision relativ zueinander bewegt werden müssen. Hierzu werden präzise mechanische Aktoren benötigt, was sich in den Herstellungskosten des Geräts und dessen Zuverlässigkeit niederschlägt. Darüber hinaus ist die Geschwindigkeit, mit der die Messung durchgeführt werden kann, durch die Geschwindigkeit der mechanischen Bewegung der beiden Oberflächen limitiert.

Es ist demnach eine Aufgabe der vorliegenden Erfindung, ein verbessertes Verfahren sowie eine verbesserte Vorrichtung zur Durchführung einer Fluoreszenz- und/oder Absorptionsmessung an einer flüssigen Probe kleinen Volumens bereitzustellen. Es ist insbesondere eine Aufgabe, den oben genannten Nachteilen Rechnung zu tragen.

Diese Aufgabe wird durch ein Verfahren gemäß Anspruch 1 und durch eine Vorrichtung gemäß Anspruch 9 gelöst. Die abhängigen Ansprüche beziehen sich auf bevorzugte Ausführungsformen.

Entsprechend betrifft die vorliegende Erfindung ein Verfahren zur Durchführung einer Fluoreszenz- und/oder Absorptionsmessung an einer flüssigen Probe. Dabei wird eine erste Oberfläche mit einem vorbestimmten Volumen der flüssigen Probe benetzt und eine elektrische Gleich- oder WechselSpannung zwischen der ersten Oberfläche und einer zweiten, der ersten Oberfläche gegenüberliegenden Oberfläche angelegt, so dass sich zwischen der ersten und der zweiten Oberfläche eine Proben-Flüssigkeitssäule ausbildet. Durch diese Flüssigkeitssäule wird dann die Fluoreszenz- und/oder Absorptionsmessung durchgeführt. Die Proben-Flüssigkeitssäule ist dabei mittels einer Isolationsschicht von zumindest einer der beiden Oberflächen, bevorzugt von der oberen zweiten Oberfläche, isoliert.

Der Lösungsgedanke beruht darauf, dass die meisten flüssigen Proben wasserbasiert sind und Wasser stark polar ist. Durch das Anlegen einer elektrischen Spannung werden daher die Wassermoleküle ausgerichtet und von der zweiten Oberfläche angezogen. So kann eine Flüssigkeitssäule ausgebildet werden, ohne dass die beiden Oberflächen gegeneinander bewegt werden müssen. Das Verfahren lässt sich nicht nur mit wässrigen Proben durchführen, sondern auch mit anderen polaren Flüssigkeiten sowie mit solchen Flüssigkeiten, die sich elektrostatisch aufladen lassen.

Wäre die Isolationsschicht nicht vorhanden, würde ein Stromkreis geschlossen, sobald die Proben-Flüssigkeitssäule die beiden Oberflächen verbindet. Für eine bestimmte Zeit würde dann ein Strom durch die Proben-Flüssigkeitssäule fließen. Dieser Stromfluss würde zu einer Veränderung der Struktur der Probenflüssigkeit führen. Beispielsweise können sich Mikrobläschen z. B. aus Sauerstoff und Wasserstoff ausbilden. Das durch die Probe strömende Licht wird an diesen Mikrobläschen durch Brechung oder Reflexion teilweise in andere Richtungen geleitet und die Transmission durch die Probe wird geringer, was zu einem deutlichen Messfehler führen würde. Die Größe des Messfehlers variiert und ist nicht konstant, sodass sie nicht herausgerechnet werden kann. Dies würde zu einer schlechten Reproduzierbarkeit der Messergebnisse führen. Durch die erfindungsgemäß vorgesehene Isolationsschicht wird der Stromfluss durch die Probe jedoch verhindert, sodass die vorstehend beschriebenen nachteiligen Effekte nicht auftreten.

Das Benetzen der ersten Oberfläche mit der flüssigen Probe kann auf herkömmliche Weise mittels einer Pipetiereinrichtung erfolgen. Dies kann manuell oder vollautomatisch geschehen. Da der Abstand zwischen den beiden Oberflächen gegebenenfalls weniger als 1 mm betragen kann, kann es vorteilhaft sein, eine der beiden Oberflächen beweglich auszugestalten, so dass diese zum Benetzen der Oberfläche voneinander weg bewegt werden können. Allerdings ist hierfür kein präziser Aktor notwendig, sondern es genügt eine Vorrichtung, mittels derer sich beispielsweise eine der beiden Oberflächen zur Seite fahren oder von der anderen Oberfläche wegklappen lässt, um so die erste Oberfläche für das Benetzen freizulegen. Gemäß einer bevorzugten Ausführungsform kann jedoch zusätzlich der Abstand zwischen der ersten und zweiten Oberfläche eingestellt werden.

Es ist bevorzugt, dass der Betrag, die Frequenz und/oder die Polarität und /oder die Dauer des Anstehens der elektrischen Spannung in Abhängigkeit von einem oder mehreren der folgenden Parameter eingestellt wird: Volumen der Probe, Polarisierbarkeit der Flüssigkeit, Abstand der ersten von der zweiten Oberfläche und/oder Zusammensetzung der Probe (insbesondere im Hinblick auf die Art der auszumessenden Substanz).

Gemäß einer bevorzugten Ausführungsform weist die erste Oberfläche einen ersten, hydrophilen Bereich und/oder in einem ersten Bereich eine hydrophile Beschichtung auf. Dadurch benetzt die flüssige Probe bevorzugt diesen ersten Bereich, wodurch im Zusammenhang mit dem vorbestimmten Probenvolumen die Ausgestaltung des Flüssigkeitstropfens definiert wird.

Hierbei ist es besonders vorteilhaft, wenn die erste Oberfläche einen zweiten, hydrophoben Bereich aufweist und/oder in einem zweiten Bereich eine hydrophobe Beschichtung aufweist. Bevorzugt umschließt der zweite Bereich dabei den ersten Bereich. Besonders bevorzugt ist der erste Bereich etwa kreisförmig und hat einen Durchmesser zwischen 0 und 5 mm, bevorzugt zwischen 1,2 und 2 mm. Ein kreisförmiger erster Bereich führt zu einer kugelkalottenartigen Ausgestaltung des Probentropfens, was aus Symmetriegründen von Vorteil ist. Durch Variation des Durchmessers dieses Bereiches wird dabei in Zusammenhang mit dem vorbestimmten Probenvolumen die Höhe der ausgebildeten Kugelkalotte definiert. Dadurch wird im Zusammenhang mit dem Abstand zwischen der ersten und zweiten Oberfläche derjenige Bereich festgelegt, der von der Probenflüssigkeit aufgrund des elektrischen Potentials überbrückt werden muss.

Vorteilhaft weist auch die zweite Oberfläche einen hydrophilen Bereich auf, der auch hier von einem hydrophoben Bereich umgeben sein kann. Diese hydrophile bzw. hydrophobe Beschichtung kann dann gleichzeitig die Isolationsschicht bilden. Wenn es sich um eine von der Isolationsschicht separierte, gesonderte Beschichtung handelt, ist diese vorteilhaft unterhalb der Isolationsschicht, also auf der der Proben-Flüssigkeitssäule zugewandten Seite ausgebildet.

Es ist bevorzugt, dass das vorbestimmte Probenvolumen zwischen 0,5 und 3,0 µl, bevorzugt zwischen 0,5 und 2,0 µl beträgt. Es ist ferner bevorzugt, dass die elektrische Spannung zwischen 500 V und 5 kV effektiv, bevorzugt zwischen 1 kV und 2 kV effektiv beträgt. Die Spannung steht vorzugsweise für eine Dauer von 20 ms - 500 ms an. Der Abstand zwischen der ersten und der zweiten Oberfläche beträgt bevorzugt zwischen 0,05 und 2,0 mm, besonders bevorzugt zwischen 0,05 und 1,0 mm. Die Höhe der benötigten Spannung ist vom Abstand des Probentropfens von der oberen Elektrode abhängig. Der Abstand besteht aus dem Luftspalt und der Isolierschichtdicke und ist somit von der Isolierschichtdicke abhängig. Messungen zeigen, dass bei einem Luftspalt von bis zu 0,4 mm und einer Isolierschichtdicke von bis zu 0,3 mm eine Spannung von ca. 1,5 kV angelegt werden muss, um den Tropfen anzuziehen.

Gemäß einer Ausführungsform werden vor dem Durchführen der Fluoreszenz- und/oder Absorptionsmessung durch die Flüssigkeitssäule die beiden Oberflächen elektrisch verbunden bzw. kurzgeschlossen. Dadurch soll verhindert werden, dass während der Messung ein Potentialunterschied zwischen den beiden Oberflächen besteht, der zum Beispiel zu einer inhomogenen Probenkonzentration führen könnte.

Die vorliegende Erfindung betrifft ferner eine Vorrichtung zur Durchführung einer Fluoreszenz- und/oder Absorptionsmessung an einer flüssigen Probe. Die Vorrichtung hat eine erste Oberfläche, eine zweite, der ersten Oberfläche gegenüberliegende Oberfläche, wobei die erste und zweite Oberfläche voneinander beabstandet sind. Die erste und/oder die zweite Oberfläche ist von der flüssigen Probe durch eine Isolationsschicht elektrisch isoliert. Ferner weist die Vorrichtung eine Lichtquelle, die in oder hinter der ersten Oberfläche angeordnet ist, und eine Einrichtung zur Detektion von auf die zweite Oberfläche auftreffenden Lichts auf. Schließlich weist die Vorrichtung eine Einrichtung zur Erzeugung einer definierten elektrischen Spannung zwischen der ersten und zweiten Oberfläche auf. Dabei ist die Einrichtung zur Erzeugung der elektrischen Spannung vorzugsweise geeignet, eine elektrische Gleichspannung und/oder eine elektrische Wechselspannung zu erzeugen.

Bei der Isolierschicht kann es sich vorteilhaft um eine nicht leitfähige Folie, beispielsweise aus einem Kunststoffmaterial, wie Polyethylen oder Teflon, handeln. Diese Folie kann vorteilhaft aufgeklebt werden. Dabei ist es besonders vorteilhaft, wenn die Folie selbstklebend ist.

Alternativ kann die Isolierschicht auch durch eine entsprechende Beschichtung aufgebracht werden, vorteilhaft durch aufdampfen, aufsputtern, tauchen, eloxieren oder aufschleudern. Dabei kann die Beschichtung aus einem zunächst flüssigen und dann aushärtenden Material, beispielsweise PMMA, bestehen, welches nach der Auftragung selbsttätig aushärtet. Das Material kann auch aufgestrichen oder aufgepinselt werden.

Die Isolierschicht kann auch aus mehreren unterschiedlichen Materialien bestehen, z. B. kann ein isolierendes Röhrchen die Elektrode seitlich umschließen und die Fläche mit einem aushärtenden Material beschichtet werden. Eine konkrete Lösung könnte so sein, dass das Röhrchen etwa 0,3 mm länger ist als die Elektrode verläuft. Der Überstand von Röhrchen und Lichtwellenleiter wird dann mit einem aushärtenden Material gefüllt. Anschließend wird das Gesamte plan geschliffen.

Bei der Lichtquelle kann es sich um jede herkömmliche Lichtquelle handeln, die üblicherweise bei Fluoreszenz- und/oder Absorptionsmessungen eingesetzt wird. Je nach Ausbildung der Lichtquelle und der ersten Oberfläche kann es bevorzugt sein, das Licht von der Lichtquelle mittels eines Lichtleiters zu der ersten Oberfläche zu leiten. Die Einrichtung zur Detektion des auftreffenden Lichts kann ebenfalls alle herkömmlichen Detektoren aufweisen, die bei derartigen Verfahren zum Einsatz kommen. Insbesondere ist es bevorzugt, dass die Einrichtung zur Detektion ebenfalls einen Lichtleiter aufweist, der das Licht von der zweiten Oberfläche zu dem Detektor leitet.

Gemäß einer bevorzugten Ausführungsform weist die Vorrichtung eine Einrichtung zum Einstellen des Abstandes zwischen der ersten und zweiten Oberfläche auf. Dabei kann es sich beispielsweise um einen Schrittmotor handeln. Es ist aber auch möglich, dass die beiden Oberflächen in bestimmten vorgegebenen Abständen verrasten und der Abstand manuell eingestellt werden kann.

Um eine der Oberflächen mit der flüssigen Probe benetzen zu können, ist es vorteilhaft, wenn diese Oberfläche freigelegt werden kann. Hierzu kann die Einrichtung zum Einstellen des Abstandes zwischen den beiden Oberflächen dienen, wenn ein hinreichend großer Abstand, beispielsweise von einigen Millimetern, erzielt werden kann. Es ist aber zusätzlich oder alternativ auch möglich, dass eine der beiden Oberflächen gegenüber der anderen Oberfläche seitlich verschoben werden kann oder von dieser weg geklappt werden kann. Dieser Mechanismus kann manuell betätigbar sein und/oder automatisiert sein.

Gemäß einer bevorzugten Ausführungsform weist die erste Oberfläche einen ersten, hydrophilen Bereich und/oder in einem ersten Bereich eine hydrophile Beschichtung auf. Es ist ferner bevorzugt, dass die erste Oberfläche einen zweiten, hydrophoben Bereich und/oder in einem zweiten Bereich eine hydrophobe Beschichtung aufweist, wobei der zweite Bereich bevorzugt den ersten Bereich umschließt. Bevorzugt ist der erste Bereich etwa kreisförmig und hat einen Durchmesser zwischen 0 und 5 mm, besonders bevorzugt zwischen 1,2 und 2,0 mm.

Wie bereits oben im Bezug auf das Verfahren ausgeführt wird, kann der Betrag, die Frequenz und/oder die Dauer des Anstehens und/oder die Polarität der elektrischen Spannung in Abhängigkeit von einem oder mehreren der folgenden Parameter eingestellt werden: Volumen der Probe, Polarisierbarkeit der Flüssigkeit, Abstand der ersten von der zweiten Oberfläche und Zusammensetzung der Probe. Hierzu weist die Vorrichtung bevorzugt eine Eingabeeinrichtung auf, mittels derer ein oder mehrere der genannten Parameter eingegeben werden können. Diese Eingabeeinrichtung kann als Schnittstelle zu einem PC ausgestaltet sein. Die Vorrichtung weist bevorzugt eine CPU auf, mittels derer in Abhängigkeit von den angegebenen Parametern der Betrag, die Frequenz und/oder die Polarität der elektrischen Spannung bestimmt wird und die Einrichtungserzeugung der elektrischen Spannung entsprechend gesteuert wird.

Gemäß einer alternativen Ausführungsform ist die Einrichtung zur Erzeugung der elektrischen Spannung dazu geeignet, eine Spannungsrampe zu erzeugen, bis die elektrische Spannung hinreichend groß ist, um die Flüssigkeitssäule auszubilden. Hierzu ist die Vorrichtung bevorzugt dazu geeignet, zu detektieren, ob eine Flüssigkeitssäule ausgebildet ist oder nicht. Dabei kann die Lichtquelle und die Einrichtung zur Detektion von auf die zweite Oberfläche auftreffenden Lichts zum Einsatz kommen. So wird beispielsweise die Intensität des an der zweiten Oberfläche detektierten Lichts sprunghaft verändert, sobald die Flüssigkeitssäule ausgebildet ist. Diese Ausführungsform hat den Vorteil, dass auf die Eingabe der Probenparameter verzichtet werden kann und gleichzeitig bei minimaler elektrischer Spannung gearbeitet werden kann.

Im Folgenden werden bevorzugte Ausführungsformen mit Bezugnahme auf die folgenden Figuren lediglich beispielhaft näher beschrieben. Es zeigen:
- Fig. 1: eine perspektivische Ansicht eines Ausführungsbeispiels der erfindungsgemäßen Vorrichtung;
- Fig. 2A: ein erstes Ausführungsbeispiel einer mit einer Isolationsschicht versehenen Oberfläche;
- Fig. 2B: ein zweites Ausführungsbeispiel einer mit einer Isolationsschicht und einer hydrophilen Beschichtung versehenen Oberfläche;
- Fig. 2C: ein drittes Ausführungsbeispiel einer mit einer Isolationsschicht, einer hydrophilen Beschichtung, und einer hydrophoben Beschichtung versehenen Oberfläche;
- Fig. 3A: eine perspektivische Ansicht eines Ausführungsbeispiels, bei welchem keine der Oberflächen mit eine hydrophilen Beschichtung versehen ist;
- Fig. 3B: ein Ausführungsbeispiel, bei welchem nur die untere Oberfläche mit einer hydrophilen Beschichtung versehen ist;
- Fig. 3C: ein Ausführungsbeispiel bei welchem nur die obere Oberfläche mit einer hydrophilen Beschichtung versehen ist und
- Fig. 3D: ein Ausführungsbeispiel bei welchem sowohl die untere als auch die obere Oberfläche mit einer hydrophilen Beschichtung versehen ist.

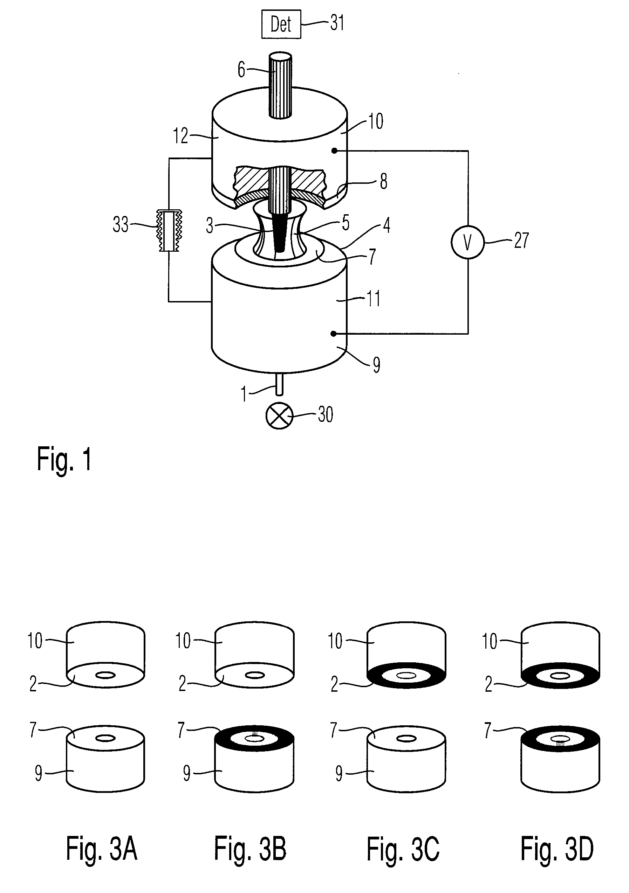

Fig. 1 veranschaulicht den Strahlengang in der erfindungsgemäßen Vorrichtung. Der Strahlengang ist ähnlich zur WO 01/14855 A1. Demnach ist die flüssige Probe 5 als Flüssigkeitssäule zwischen einer ersten Oberfläche 7 und einer zweiten Oberfläche 2, die der ersten Oberfläche 7 gegenüber liegt, ausgebildet. Die Form der Flüssigkeitssäule 5 wird dabei im Wesentlichen von der Oberflächenspannung der flüssigen Probe 5 und den Benetzungseigenschaften an den Oberflächen 2 und 7 bestimmt. Das Licht 3 wird von der nur schematisch dargestellten Lichtquelle 30 mit Hilfe eines Lichtleiters 1 zur ersten Oberfläche 7 und in die flüssige Probe 5 geleitet. Darin weitet sich der Lichtstrahl 3 aufgrund von Streuung leicht auf. Das an der zweiten Oberfläche 2 auftreffende Licht wird von einem zweiten Lichtleiter 6 zu einem Detektor 31 bzw. Spektrometer geleitet. Wegen der möglichen Aufweitung des Lichtstrahles innerhalb der Probe 5 hat der Lichtleiter 6 bevorzugt einen größeren Durchmesser als der Lichtleiter 1 oder aber weist zumindest eine größere Apertur auf. Die Lichtquelle 30 kann mit der ersten Oberfläche 7 oder der zweiten Oberfläche 2 verbunden sein und der Detektor 31 mit der jeweils gegenüber liegenden Oberfläche. Beide Richtungen sind also möglich.

Die Flüssigkeitssäule, die in Fig. 1 dargestellt ist, wird bei der WO 01/14855 A1 wie eingangs dargestellt, derart erzeugt, dass eine oder beide Oberflächen mit der Flüssigkeit benetzt werden, die Oberflächen dann soweit aufeinander zu bewegt werden, dass ein durchgehendes Flüssigkeitsvolumen zwischen den beiden Oberflächen 2 und 7 ausgebildet wird, und die beiden Oberflächen dann soweit voneinander weg bewegt werden, bis eine Flüssigkeitssäule 5 der gewünschten optischen Weglänge erzeugt ist. Ist diese eingestellte optische Weglänge bekannt, kann mittels dieser und der von dem Detektor 31 bzw. Spektrometer ermittelten Daten Information bezüglich der Zusammensetzung der Probe 5 ermittelt werden. Allerdings erfordert das Aufeinanderzu- und Voneinanderwegbewegen der beiden Oberflächen eine präzise mechanische Steuerung der beiden Oberflächen. Dies macht bei der WO 01/14855 A1 einen mechanischen Aktor notwendig, der mindestens zwei Positionen aktiv anfahren kann, die Benetzungsposition und die Messposition. Neben dem erhöhten Materialaufwand ist im Allgemeinen ein zyklisches Neujustieren der Gerätemechanik erforderlich.

Die Ausbildung der Flüssigkeitssäule erfolgt bei der Erfindung im Gegensatz zum Stand der Technik auf Grundlage eines völlig anderen Konzepts. Die erfindungsgemäße Vorrichtung weist zur Durchführung einer Fluoreszenz- und/oder Absorptionsmessung an einer flüssigen Probe eine Einrichtung zur Erzeugung einer definierten elektrischen Spannung zwischen der ersten Oberfläche 7 und der zweiten Oberfläche 2 auf. Diese Einrichtung vermag den Betrag, die Frequenz und/oder die Polarität und/oder die Dauer des Anstehens der angelegten elektrischen Spannung in Abhängigkeit von verschiedenen Probenparametern einzustellen. Die Erfindung basiert dabei auf der Idee, die flüssige Probe mit einem vorbestimmten Volumen auf die erste Oberfläche 7 aufzubringen. Am einfachsten ist dies mittels einer manuell handhabbaren Pipette möglich. Alternativ können aber auch herkömmliche Pipetiereinrichtungen, die teilweise oder voll automatisiert arbeiten, eingesetzt werden. Das eingebrachte Probenvolumen wird auf der ersten Oberfläche 7 in Abhängigkeit von der Oberflächenspannung des Probenmaterials und den Oberflächeneigenschaften der ersten Oberfläche 7 einen Tropfen bilden. Dabei kann auf die geometrische Form des Tropfens mit Hilfe verschiedenartiger Gestaltungen der ersten Oberfläche 7 direkt Einfluss genommen werden.

Wird nun eine elektrische Spannung zwischen der ersten Oberfläche 7 und der zweiten Oberfläche 2 angelegt, so wird der auf der ersten Oberfläche 7 ausgebildete Tropfen durch elektrische Kräfte z. B. nach oben in Richtung der zweiten Oberfläche 2 gezogen. Diese Kräfte rühren daher, dass Wasser polar ist und die Wassermoleküle daher ein permanentes elektrisches Dipolmoment besitzen. Auf dieses wirkt in einem Gradientenfeld eine Kraft. Ist diese Kraft hinreichend groß, wird der Flüssigkeitstropfen soweit deformiert, bis er die zweite Oberfläche 2 benetzt und dadurch die in Fig. 1 dargestellte Flüssigkeitssäule 5 ausbildet. Deren geometrische Form ist im Wesentlichen durch die Oberflächenspannung der Probe und die Oberflächeneigenschaften der beiden Oberflächen 7 und 2 definiert. Zur Grobeinstellung des Abstands genügt eine einfache Einrichtung 33, z. B. in Form eines Spindelantriebs.

Ferner ist eine Isolationsschicht 8 vorhanden, welche die zweite Oberfläche 2 von der Probe bzw. von der Probenflüssigkeitssäule 5, welche sich zwischen den beiden Oberflächen 2 und 7 erstreckt, isoliert. In dargestelltem bevorzugtem Ausführungsbeispiel ist die Isolationsschicht 8 an der zweiten Oberfläche 2 ausgebildet. Dies hat den Vorteil, dass die Flüssigkeitssäule 5 mit der ersten Oberfläche 7 verbunden bleibt und daher elektrostatisch gut geladen wird. Sie kann alternativ oder zusätzlich auch an der ersten Oberfläche 7 ausgebildet sein. Dann wird die Flüssigkeitssäule über die Influenz elektrostatisch geladen. Grundsätzlich ist es aber ausreichend nur eine der beiden Oberflächen 2 oder 7, sehr bevorzugt die obere zweite Oberfläche 2, mit einer Isolationsschicht 8 zu versehen. Es ist aber auch möglich, beide Oberflächen 2 und 7 mit einer Isolationsschicht 8 zu versehen.

Die Isolationsschicht 8 dient dazu, einen Stromfluss zwischen den beiden Oberflächen 7 und 2 zu verhindern. Wird dieser Strom durch die Flüssigkeitsprobe 5 nicht unterbunden, so kann dieser Stromfluss zu einer Veränderung der Konsistenz des Probentropfens führen. Beispielsweise können sich Mikrobläschen aus Sauerstoff und Wasserstoff bilden. Dies kann dazu führen, dass das durch die Probe strömende Licht an den Mikrobläschen unkontrolliert gebrochen und abgeleitet wird und somit weniger Licht zum Detektor gelangt. Dies führt zu einem spürbaren Messfehler. Da der Messfehler variiert und von der Art der Probe und von der Höhe der angelegten Spannung abhängig ist, kann dieser Messfehler nicht ohne weiteres vorhergesagt werden. Das heißt dieser Messfehler kann nicht als Offset-Fehler aus der Messung einfach herausgerechnet werden. Dies führt insgesamt zu einer schlechten Reproduzierbarkeit der Messergebnisse.

Durch die erfindungsgemäße Isolationsschicht 8 wird dieser Stromfluss jedoch von vornherein unterbunden und vorstehend genannten Probleme treten nicht auf. Insgesamt wird dadurch die Messungsgenauigkeit erhöht. Wenn die Isolationsschicht 8 dünn genug ausgebildet ist und vorzugsweise aus einem Material ausgebildet ist, welches geringe dielektrische Verluste hat, so behindert sie das elektrische Feld nicht, um den ProbenTropfen 5 nach oben zu ziehen. Die bevorzugte Dicke der Isolationsschicht beträgt 20µm -500µm, besonders bevorzugt ca. 300µm. Wenn der Tropfen an der oberen Oberfläche 2 andockt, trifft er entweder dort nicht auf leitendes Material, weil sich dort die Isolationsschicht 8 befindet, oder aber der Probentropfen 5 ist ohnehin schon durch die sich an der Oberfläche 7 befindende Isolationsschicht 8 von der unteren Oberfläche 7 isoliert und ein Andocken auf der metallischen Oberfläche 2 ist damit unschädlich. Somit fließt kein Strom durch den Probentropfen und es bilden sich keine Mikrobläschen, welche das Messergebnis verfälschen könnten.

Im in Fig. 1 dargestellten Ausführungsbeispiel befindet sich die Isolationsschicht 8 nur an der Unterseite des oberen Elektrodenkörpers 10. Es ist aber genauso denkbar und eventuell herstellungstechnisch einfacher, den gesamten Elektrodenkörper 10 allseitig oder zumindest auch an seiner Mantelfläche 12 mit der Isolationsschicht 8 zu versehen. Das ist sogar die bevorzugte Ausführung, weil das Gerät ja auch einen größeren Tropfen verarbeiten können muss, in den die obere Elektrode eintaucht. In diesem Fall muss der Stromfluss auch unterbunden sein. Alternativ oder zusätzlich könnte auch der untere Elektrodenkörper 9 allseitig oder zumindest an seiner Oberfläche 7 und eventuell an seiner Mantelfläche 11 mit einer entsprechenden Isolationsschicht 8 versehen sein. Aus Gründen der deutlich schlechteren Aufladung des Probentropfens 5 ist dies aber weniger bevorzugt.

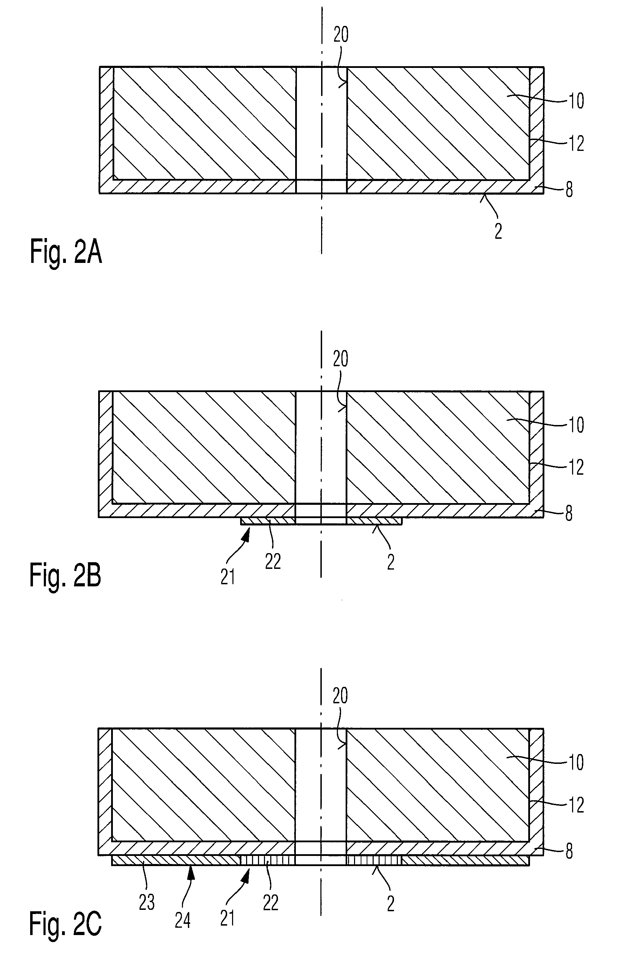

Fig. 2A zeigt einen Schnitt durch den oberen Elektrodenkörper 10 in einer etwas anderen Ausgestaltung. Auf der Unterseite des Elektrodenkörpers 10 befindet sich die Isolierschicht 8, um die Oberfläche 2 des oberen Elektrodenkörpers 10 von der in Fig. 1 dargestellten Probensäule 5 elektrisch zu isolieren. Zu erkennen ist ferner eine den Elektrodenkörper 10 durchdringende Bohrung 20, in welche der in Fig. 1 gezeigte Lichtleiter 6 eingreift. Die Probensäule 5 ist somit mittels der Isolierschicht 8 elektrisch von dem Potential des beispielsweise aus Metall gefertigten Elektrodenkörpers 10 isoliert. Dadurch wird ein Stromeintritt aus dem Elektrodenkörper 10 in die Probensäule 5 verhindert. Um die Isolationswirkung zu verbessern, kann es sinnvoll sein, auch die Innenwandung der Bohrung 20 mit der Isolierschicht 8 zu versehen und besonders auch die Außenwandung 12 des Elektrodenkörpers 10.

Fig. 2B zeigt eine weitere Ausgestaltung des oberen Elektrodenkörpers 10. In Übereinstimmung mit dem in Fig. 2A gezeigten Ausführungsbeispiel ist die Unterseite des Elektrodenkörpers 10 hier mit einer Isolierschicht 8 versehen.

Zusätzlich befindet sich unterhalb der Isolierschicht 8 noch ein Bereich 21 mit einer hydrophilen Beschichtung 22. Die hydrophile Beschichtung 22 sorgt dafür, dass sich die in der Regel aus einer wässrigen Lösung bestehende Probenflüssigkeit nur im Bereich dieser hydrophilen Beschichtung 21 anlagert bzw. nur dort andockt. Handelt es sich bei der Probenflüssigkeit nicht um eine wässrige, sondern beispielsweise um eine ölige Flüssigkeit, so ist eine entsprechende andere Oberflächenbeschichtung in diesem Bereich sinnvoll.

Auch bei dem in Fig. 2C dargestelltem Ausführungsbeispiel ist eine entsprechende hydrophile Beschichtung 22 in Übereinstimmung mit dem in Fig. 2B gezeigten Ausführungsbeispiel vorhanden, welche den zentralen ersten Bereich 21 um die Bohrung 20 herum einnimmt. Zusätzlich ist jedoch eine hydrophobe Beschichtung 23 in einem zweiten Bereich 24 vorhanden, wobei der zweite Bereich 24 den ersten Bereich 21 umschließt. Die hydrophobe Beschichtung 23 sorgt dafür, dass der zweite Bereich 24 von der wässrigen Lösung nicht benetzt wird. Somit wird die Konzentration der Probenflüssigkeit 5 auf den hydrophilen Bereich 21 noch weiter verbessert.

Die Isolierschicht 8 kann aus einer dünnen Folie bestehen, beispielsweise aus Polyethylen oder Teflon. Diese kann entweder durch Benetzung mit einem geeigneten Kleber auf die z.B. metallische Oberfläche des zweiten Elektrodenkörpers 10 aufgeklebt werden. Die Folie kann aber auch selbstklebend sein. Eine andere Herstellungsmöglichkeit besteht darin, dass ein isolierendes Material, beispielsweise PMMA, auf die Oberfläche des Elektrodenkörpers 10 aufgeschleudert wird und dann in einer dünnen Schicht aushärtet. Der Elektrodenkörper 10 kann aber auch entsprechend bedampft werden, die Isolierschicht 8 kann aufgesputtert werden oder die Isolierschicht 8 kann beispielsweise durch ein Tauchverfahren durch Eintauchen des Elektrodenkörpers 10 in ein Kunststoffbad hergestellt werden. Auch kann die hydrophile Schicht 22 und die hydrophobe Schicht 23 durch ein entsprechendes Verfahren beispielsweise durch Aufdampfen oder Aufsputtern aufgebracht werden, wobei die entsprechenden Bereiche 21 bzw. 24 vorher so zu maskieren sind, dass die jeweils anderen Bereiche abgedeckt werden.

Sowohl auf die geometrische Form des Probentropfens auf der ersten Oberfläche 7 als auch auf die geometrische Form der schlussendlich ausgebildeten Flüssigkeitssäule kann gezielt Einfluss genommen werden, indem die Oberflächen 7 und 2 mit bestimmten Eigenschaften bereitgestellt werden. Verschiedene erfindungsgemäße Ausführungsformen der beiden Oberflächen 7 und 2 sind in den Figuren 3A bis 3D dargestellt. Darin stellt der innerste, weiß markierte Bereich die Bohrung für den Lichtleiter 1 bzw. 6 dar, wohingegen die grau bzw. schwarz markierten Bereiche der Oberflächen 7 und 2 hydrophile bzw. hydrophobe Bereiche markieren.

Gemäß einer ersten bevorzugten Ausführungsform (vgl. Fig. 3A) sind abgesehen von den beiden Lichtleitern die gesamten Oberflächen 2 und 7 hydrophob ausgestaltet. An der oberen Oberfläche 2 befindet sich die hier nicht dargestellte Isolationsschicht 8, die ebenfalls hydrophob ist. Somit wird der Flüssigkeitstropfen im Wesentlichen nur den Bereich der Lichtleiter benetzen und eine im Wesentlichen symmetrische Flüssigkeitssäule zwischen diesen ausbilden.

Gemäß einer weiteren bevorzugten Ausführungsform (vgl. Fig. 3B) ist der Lichtleiter 1 auf der ersten Oberfläche 7 mit einem kreisförmigen hydrophilen Bereich umgeben. Dadurch wird die von dem Flüssigkeitstropfen benetzte Oberfläche im Vergleich zur Ausführungsform der Fig. 3A vergrößert, was bei gleichem Probenvolumen die Höhe des Probentropfens gegenüber der Ausführungsform der Fig. 3A verringert oder aber das Aufbringen eines größeren Probenvolumens ermöglicht. Da bei der zweiten Oberfläche 2 hier kein solcher hydrophiler Bereich, sondern nur die hier nicht dargestellte Isolationsschicht 8 vorgesehen ist, wird die generierte Flüssigkeitssäule 5 derart asymmetrisch ausgebildet, dass diese nach unten hin breiter wird.

Gemäß einer weiteren bevorzugten Ausführungsform (vgl. Fig. 3C) ist die erste Oberfläche 7 wie in Fig. 3A ausgestaltet, wohingegen die zweite Oberfläche 2 einen den Lichtleiter 6 umgebenden hydrophilen Bereich aufweist, wie dies in Fig. 2B und Fig. 2C veranschaulicht ist. Die geometrische Form des Tropfens wird daher derjenigen der Ausführungsform der Fig. 3A entsprechen, wohingegen die Säule, sobald diese ausgebildet ist, auf der zweiten Oberfläche 2 einen größeren Bereich benetzt als auf der ersten Oberfläche 7. Dies kann beispielsweise dazu dienen, Schwerkrafteffekte auszugleichen, so dass die entstehende Flüssigkeitssäule 5 einen im Wesentlichen konstanten Durchmesser aufweist.

Eine vierte Ausführungsform (vgl. Fig. 3D) kombiniert die untere Oberfläche 7 der Fig. 3B mit der oberen Oberfläche 2 der Fig. 3C. Bezüglich der Benetzungseigenschaften ist diese Ausführungsform mit der Ausführungsform der Fig. 3A zu vergleichen, wobei hier aber jeweils ein Bereich benetzt wird, der größer ist als der jeweilige Lichtleiter. Dadurch wird beispielsweise sichergestellt, dass trotz der in Fig. 1 dargestellten Einschnürung der Flüssigkeitssäule 5 der generierte Lichtstrahl vollständig durch die Flüssigkeitsprobe verläuft.

Die in den Figuren 2A bis 2C und 3A bis 3D gezeigten Ausführungsformen sind lediglich beispielhaft zu verstehen.

Die Geometrie der einzelnen Elemente, deren Dimension und Anordnung mag im einzelnen verändert werden, ohne vom Schutzumfang der Ansprüche abzuweichen. Es ist auch vorstellbar, dass die Vorrichtung modular aufgebaut ist, so dass in ein und der selben Vorrichtung je nach gewünschter Messung verschiedenartige Oberflächenmodule eingesetzt werden können.

Wie bereits deutlich wurde, weist die vorliegende Erfindung mehrere Vorteile gegenüber dem Stand der Technik auf. Indem die Flüssigkeitssäule 5 mittels elektrischer Kräfte ausgebildet wird, kann auf teure und anfällige mechanische Aktoren verzichtet werden. Dies verringert die Herstellungskosten der erfindungsgemäßen Vorrichtung und steigert deren Zuverlässigkeit. Unter anderem führt dies auch zu einem verringerten Serviceaufwand, da mechanische Aktoren regelmäßig mechanisch nachjustiert werden müssen. Schließlich wird die Geschwindigkeit, mit der die Flüssigkeitssäule ausgebildet wird, gegenüber dem Stand der Technik erhöht, da sich die Flüssigkeitssäule bei angelegter elektrischer Spannung schlagartig ausbildet. Die Isolationsschicht verhindert die beschriebenen Messfehler, die durch eine Eintrübung der Probenflüssigkeit in Folge eines Stromflusses entstehen könnte.

Alle in der Beschreibung beschriebenen, in den Ansprüchen beanspruchten oder in der Zeichnung gezeichneten Merkmale sind im Rahmen der Erfindung beliebig miteinander kombinierbar.

## Patentansprüche

1. Verfahren zur Durchführung einer Fluoreszenz- und/oder Absorptionsmessung an einer flüssigen Probe mit den Schritten:
a) Benetzen einer ersten Oberfläche (7) mit einem vorbestimmten Volumen der flüssigen Probe;
b) Anlegen einer elektrischen Gleich- oder WechselSpannung zwischen der ersten Oberfläche (7) und einer zweiten, der ersten Oberfläche (7) gegenüberliegenden Oberfläche (2), so dass sich zwischen der ersten und der zweiten Oberfläche (2,7) eine Proben-Flüssigkeitssäule (5) ausbildet; wobei die erste und/oder zweite Oberfläche (2,7) von der Proben-Flüssigkeitssäule (5) durch eine Isolierschicht (8) elektrisch isoliert ist, und
c) Durchführen der Fluoreszenz- und/oder Absorptionsmessung durch die Flüssigkeitssäule (5).

2. Verfahren nach Anspruch 1,
wobei der Abstand zwischen der ersten und zweiten Oberfläche (2,7) eingestellt wird.

3. Verfahren nach Anspruch 1 oder 2,
wobei der Betrag und/oder die Frequenz und/oder die Dauer des Anstehens und/oder die Polarität der elektrischen Spannung in Abhängigkeit von einem oder mehreren der folgenden Parameter eingestellt wird: Volumen der Probe, Polarisierbarkeit der Flüssigkeit, Abstand der ersten von der zweiten Oberfläche, Leitfähigkeit der Flüssigkeit, Zusammensetzung der Probe.

4. Verfahren nach einem der vorangehenden Ansprüche,
wobei die Isolierschicht (8) durch eine nicht leitfähige Folie gebildet ist, welche insbesondere aufgeklebt wird.

5. Verfahren nach einem der Ansprüche 1 bis 3,
wobei die Isolierschicht (8) durch eine Beschichtung gebildet ist, welche insbesondere aufgedampft, aufgesputtert, aufgestrichen, aufgepinselt oder aufgeschleudert wird.

6. Verfahren nach einem der vorangehenden Ansprüche,
wobei die erste Oberfläche (7) und/oder die zweite Oberfläche (2) einen ersten, hydrophilen Bereich (21) aufweist und/oder in einem ersten Bereich (21) eine hydrophile Beschichtung (22) aufweist.

7. Verfahren nach Anspruch 4,
wobei die erste Oberfläche (7) und/oder die zweite Oberfläche (2) einen zweiten, hydrophoben Bereich (24) aufweist und/oder in einem zweiten Bereich (24) eine hydrophobe Beschichtung (23) aufweist und wobei der zweite Bereich (24) den ersten Bereich (21) umschließt.

8. Verfahren nach einem der vorangehenden Ansprüche,
wobei vor dem Durchführen der Fluoreszenz- und/oder Absorptionsmessung durch die Flüssigkeitssäule (5) gemäß Schritt c) die beiden Oberflächen (2,7) elektrisch kurzgeschlossen werden.

9. Vorrichtung zur Durchführung einer Fluoreszenz- und/oder Absorptionsmessung an einer flüssigen Probe mit:
einer ersten Oberfläche (7);
einer zweiten, der ersten Oberfläche (7) gegenüberliegenden Oberfläche (2), wobei die erste und
zweite Oberfläche (2,7) voneinander beabstandet sind die erste Oberfläche (7) und/oder die zweite Oberfläche (2) mittels einer Isolierschicht (8) von der flüssigen Probe (5) isoliert ist;
einer Lichtquelle (30) auf, in oder hinter der ersten Oberfläche (7);
einer Einrichtung (31) zur Detektion von auf die zweite Oberfläche (2) auftreffenden Lichts; und
einer Einrichtung (32) zur Erzeugung einer definierten elektrischen Spannung zwischen der ersten und zweiten Oberfläche (7,2).

10. Vorrichtung nach Anspruch 9,
ferner mit einer Einrichtung (33) zum Einstellen des Abstandes zwischen der ersten und zweiten Oberfläche (7,2) .

11. Vorrichtung nach Anspruch 9 oder 10,
wobei die Isolierschicht (8) durch eine nicht leitfähige Folie gebildet ist, welche insbesondere aufgeklebt ist.

12. Vorrichtung nach Anspruch 9 oder 10,
wobei die Isolierschicht (8) durch eine Beschichtung gebildet ist, welche insbesondere aufgedampft, aufgesputtert, aufgepinselt, aufgestrichen oder aufgeschleudert ist.

13. Vorrichtung nach einem der Ansprüche 9 bis 12,
wobei die erste Oberfläche (7) und/oder die zweite Oberfläche (2) einen ersten, hydrophilen Bereich (21) aufweist und/oder in einem ersten Bereich (21) eine hydrophile Beschichtung (22) aufweist.

14. Vorrichtung nach Anspruch 13,
wobei die erste Oberfläche (7) und/oder die zweite Oberfläche (2) einen zweiten, hydrophoben Bereich (23) aufweist und/oder in einem zweiten Bereich (23) eine hydrophobe Beschichtung (22) aufweist und wobei der zweite Bereich (23) den ersten Bereich (21) umschließt.
